# EUROPEAN PATENT APPLICATION

(11) **EP 2 662 715 A1**
(43) Date of publication of application: **13.11.2013**
(21) Application number: 13167286.7
(22) Date of filing: 10.05.2013
(51) Int. Cl.: G02B 6/42

(54) **Optical transmission module**

(30) Priority: 11.05.2012 JP 2012108973
(71) Applicant: MURATA MANUFACTURING CO., LTD., Nagaokakyo-shi, Kyoto 617-8555 (JP)
(72) Inventor: Kohnishi, Katsumi, Nagaokakyo-shi, Kyoto 617-8555 (JP)
(74) Representative: Reeve, Nicholas Edward

(57) **Abstract**

In an optical transmission module, an optical fiber includes a core wire (102) made of a resin and a cover portion (104) made of a resin and covering the core wire, and has an end surface (S1) formed by cutting the core wire and the cover portion by the same plane. A plug (12) includes an optical device optically coupled to the core wire and a sealing resin containing the optical device and having a bottom surface (S2) with which the end surface is in contact.

## Description

### BACKGROUND OF THE INVENTION

### 1. Field of the Invention

The present invention relates to an optical transmission module, and more particularly relates to an optical fiber and a plug for use in optical communication.

### 2. Description of the Related Art

As an existing optical transmission module, for example, a plug described in Japanese Unexamined Patent Application Publication No. 2012-68391 is known. Hereinafter, the plug described in Japanese Unexamined Patent Application Publication No. 2012-68391 will be described. FIG. 8 is an exploded perspective view of a plug 500 described in Japanese Unexamined Patent Application Publication No. 2012-68391. FIG. 9 is a diagram of the plug 500 described in Japanese Unexamined Patent Application Publication No. 2012-68391, as seen from its back surface.

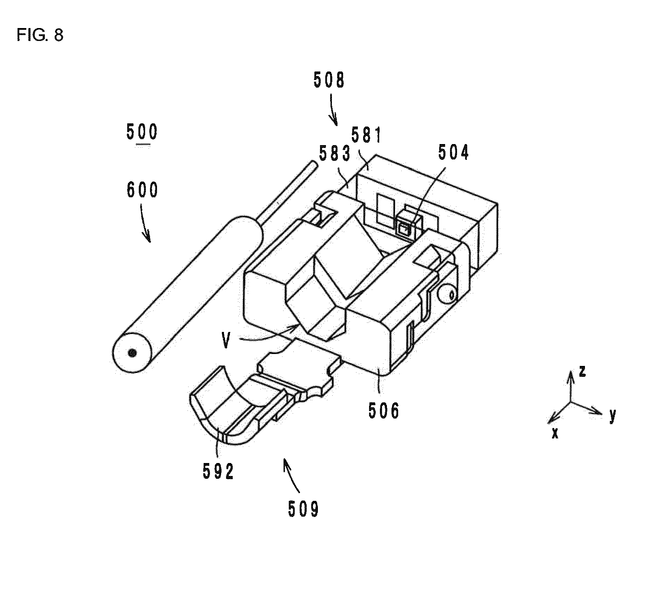

As shown in FIG. 8, the plug 500 has a substantially rectangular parallelepiped shape and includes a photoelectric conversion device 504, a holder 506, a photoelectric conversion device mounted portion 508, and a retaining member 509. As shown in FIG. 8, the plug 500 is provided at one end of an optical fiber 600 and converts an optical signal to an electric signal or converts an electric signal to an optical signal. Hereinafter, the direction in which the optical fiber 600 extends is defined as an x-axis direction; the direction in which long sides of the photoelectric conversion device mounted portion 508 extend when the photoelectric conversion device mounted portion 508 is seen in a planar view from the x-axis direction is defined as a y-axis direction; and the direction in which short sides of the photoelectric conversion device mounted portion 508 extend when the photoelectric conversion device mounted portion 508 is seen in a planar view from the x-axis direction is defined as a z-axis direction. The x-axis direction, the y-axis direction, and the z-axis direction are orthogonal to each other.

The photoelectric conversion device mounted portion 508 includes a substrate 581 and a sealing portion 583 and has a substantially rectangular parallelepiped shape. The substrate 581 and the sealing portion 583 each have a substantially rectangular parallelepiped shape and are aligned in order from the negative direction side toward the positive direction side in the x-axis direction. The photoelectric conversion device 504 is optically coupled to the optical fiber 600 and mounted on the substrate 581. The holder 506 has, in its surface on the positive direction side in the z-axis direction, a groove V having a substantially V-shaped cross-section for retaining the optical fiber 600.

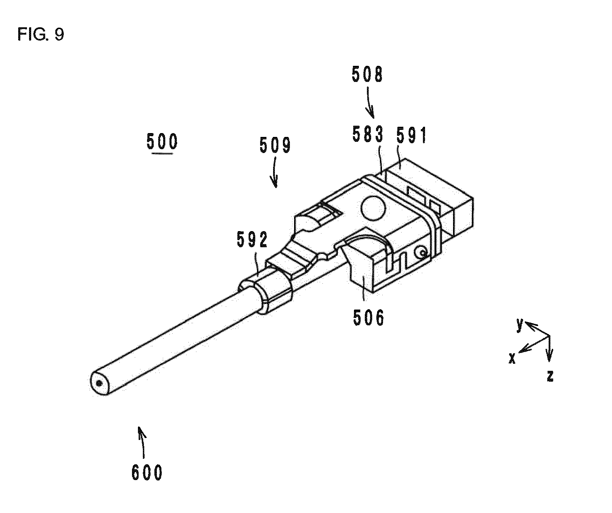

When the optical fiber 600 is placed in the groove V, the optical axis of a core wire of the optical fiber 600 and the optical axis of the photoelectric conversion device 504 are caused to coincide with each other. Then, an end portion of the optical fiber 600 is fixed to the groove V by an adhesive. Furthermore, as shown in FIG. 9, the optical fiber 600 is retained to the plug 500 by a swaging portion 592 of the retaining member 509.

Meanwhile, in the plug 500 described in Japanese Unexamined Patent Application Publication No. 2012-68391, the holder 506 for positioning the optical fiber 600 is required in order to optically couple the optical fiber 600 and the photoelectric conversion device 504 with high accuracy. More specifically, in the optical fiber 600, as shown in FIG. 8, a cover is removed at its end and the core wire is exposed. When the core wire which is relatively thin comes into strong contact with the sealing portion 583, the core wire bends and it is difficult to cause the optical axis of the core wire and the optical axis of the photoelectric conversion device 504 to coincide with each other. Thus, in the plug 500, it is necessary to accurately position the optical fiber 600 in the x-axis direction by the holder 506. In other words, in the plug 500, the holder 506 is required.

### SUMMARY OF THE INVENTION

Accordingly, we have appreciated that it would be desirable to provide an optical transmission module that allows an operation of coupling an optical fiber and an optical device to be easily conducted even though a holder for positioning the optical fiber is not required.

According to preferred embodiments of the present invention, an optical transmission module includes: an optical fiber including a core wire made of a resin and a cover portion made of a resin and covering the core wire, the optical fiber having an end surface formed by cutting the core wire and the cover portion by the same plane; and a plug including an optical device optically coupled to the core wire and a sealing resin containing the optical device and having a bottom surface with which the end surface is in contact.

According to the preferred embodiments of the present invention, the optical transmission module allows an operation of coupling the optical fiber and the optical device to be easily conducted even though a holder for positioning the optical fiber is not required.

Other features, elements, characteristics and advantages of the present invention will become more apparent from the following detailed description of preferred embodiments of the present invention with reference to the attached drawings.

### BRIEF DESCRIPTION OF THE DRAWINGS

FIG. 1 is an exploded perspective view of an optical transmission module according to an embodiment of the present invention;
FIG. 2 is a diagram of a sealing resin and a substrate of the optical transmission module in FIG. 1, as seen in a planar view from an x-axis positive direction side;
FIG. 3 is a diagram of the sealing resin and the substrate of the optical transmission module in FIG. 1, as seen in a planar view from a z-axis positive direction side;
FIG. 4 is a diagram of the optical transmission module in FIG. 1, as seen from its back surface;
FIG. 5 is an external perspective view of the optical transmission module in FIG. 1;
FIG. 6 is an external perspective view of a receptacle to which the optical transmission module in FIG. 1 is mounted;
FIG. 7 is an external perspective view of the optical transmission module in FIG. 1 and the receptacle in FIG. 6;
FIG. 8 is an exploded perspective view of a plug described in Japanese Unexamined Patent Application Publication No. 2012-68391; and
FIG. 9 is a diagram of the plug described in Japanese Unexamined Patent Application Publication No. 2012-68391, as seen from its back surface.

### DESCRIPTION OF THE PREFERRED EMBODIMENTS

### (Configuration of optical transmission module)

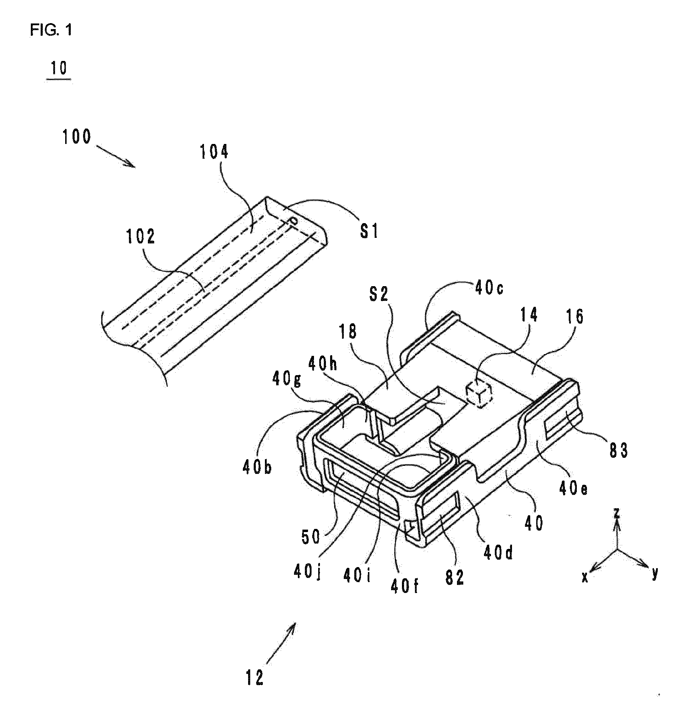

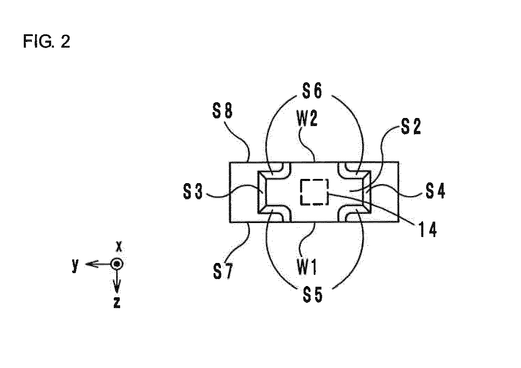

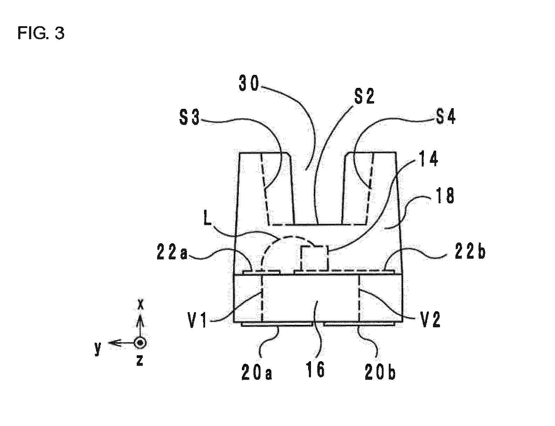

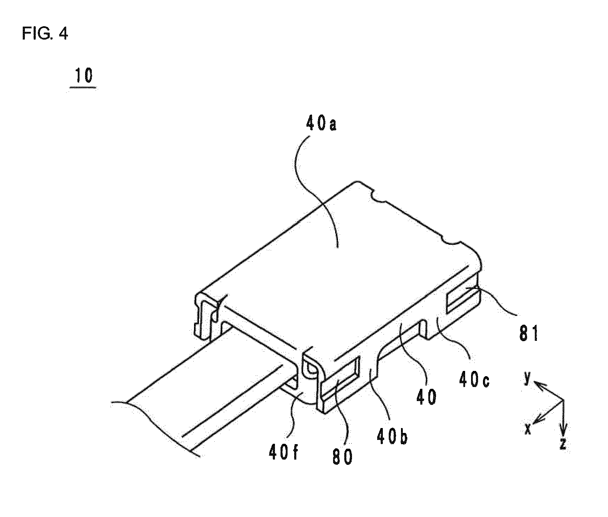

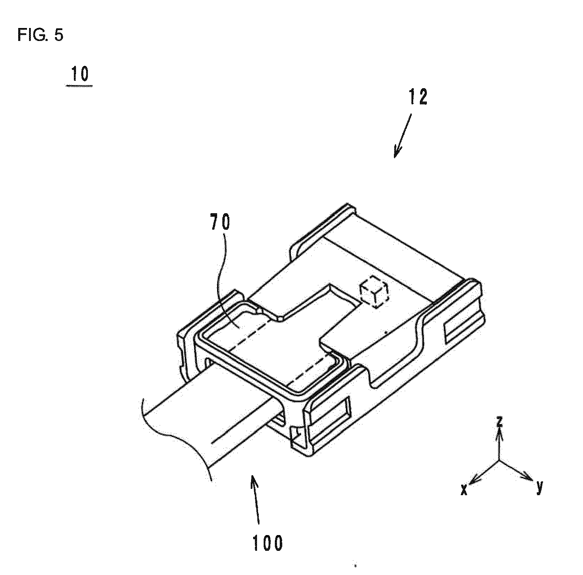

Hereinafter, an optical transmission module according to an embodiment of the present invention will be described with reference to the drawings. FIG. 1 is an exploded perspective view of the optical transmission module according to the embodiment of the present invention. FIG. 2 is a diagram of a sealing resin and a substrate of the optical transmission module in FIG. 1, as seen in a planar view from an x-axis positive direction side. FIG. 3 is a diagram of the sealing resin and the substrate of the optical transmission module in FIG. 1, as seen in a planar view from a z-axis positive direction side. FIG. 4 is a diagram of the optical transmission module in FIG. 1, as seen from its back surface. FIG. 5 is an external perspective view of the optical transmission module in FIG. 1.

As shown in FIG. 1, the optical transmission module 10 includes an optical fiber 100 and a plug 12. In addition, the plug 12 has a substantially rectangular parallelepiped shape and includes an optical device 14, a substrate 16, a sealing resin 18, and a metal cover 40. The plug 12 is provided at one end of the optical fiber 100 as shown in FIG. 1, and converts an optical signal to an electric signal or converts an electric signal to an optical signal. Hereinafter, the direction in which the optical fiber 100 extends is defined as an x-axis direction; the direction along long sides of the substrate 16 when the substrate 16 is seen in a planar view from the x-axis direction is defined as a y-axis direction; and the direction along short sides of the substrate 16 when the substrate 16 is seen in a planar view from the x-axis direction is defined as a z-axis direction. The x-axis direction, the y-axis direction, and the z-axis direction are orthogonal to each other.

As shown in FIG. 1, the optical fiber 100 includes a core wire 102 and a cover portion 104. The core wire 102 includes a core and a clad each made of a resin material such as a fluorine resin. The cover portion 104 is made of a resin material such as a fluorine resin and covers the core wire 102.

In addition, an end surface S1 of the optical fiber 100 which located at an end portion of the optical fiber 100 on the negative direction side in the x-axis direction is substantially rectangular. Furthermore, the end surface S1 is composed of cut surfaces of the core wire 102 and the cover portion 104 that have been cut by the same plane. It should be noted that at an end portion of a general optical fiber, a cover portion is removed and a core wire is exposed. This is because glass is used for the core wire and a material other than glass is used for the cover portion, and thus it is impossible to simultaneously cut the core wire and the cover portion. Meanwhile, in the optical fiber 100, the resin materials are used for both the core wire 102 and the cover portion 104. Thus, in the optical fiber 100, it is possible to simultaneously cut the core wire 102 and the cover portion 104.

The optical device 14 is a semiconductor device such as a photodiode (light-receiving device) or a VCSEL (light-emitting device) and is optically coupled to the optical fiber 100. The substrate 16 is a resin substrate having a substantially rectangular parallelepiped shape. The optical device 14 is mounted on a surface of the substrate 16 on the positive direction side in the x-axis direction as described below.

As shown in FIG. 3, external terminals 20a and 20b are provided on a surface of the substrate 16 on the negative direction side in the x-axis direction so as to be aligned in order from the positive direction side toward the negative direction side in the y-axis direction. Terminal portions 22a and 22b are provided on the surface of the substrate 16 on the positive direction side in the x-axis direction so as to be aligned in order from the positive direction side toward the negative direction side in the y-axis direction. Here, the external terminal 20a and the terminal portion 22a are opposed to each other and connected to each other via a via V1. The external terminal 20b and the terminal portion 22b are opposed to each other and connected to each other via a via V2. In addition, the optical device 14 is mounted on the terminal portion 22b. Furthermore, the terminal portion 22a and the optical device 14 are electrically connected to each other by means of wire bonding via a wire L.

As shown in FIGS. 1 and 3, the sealing resin 18 is a member whose material is an epoxy resin and which has a substantially rectangular parallelepiped shape. In addition, the sealing resin 18 is provided on the positive direction side of the substrate 16 in the x-axis direction and contains the optical device 14.

As shown in FIG. 3, a recess 30 for inserting the optical fiber 100 therein is provided in a surface of the sealing resin 18 on the positive direction side in the x-axis direction. As shown in FIG. 2, a bottom surface S2 of the recess 30 perpendicular to the x-axis direction is substantially rectangular so as to correspond to the end surface S1 of the optical fiber 100. In addition, as shown in FIGS. 2 and 3, the distance between a contact surface S3 of the recess 30 on the positive direction side in the y-axis direction and a contact surface S4 of the recess 30 on the negative direction side in the y-axis direction (a contact surface facing the contact surface S3) is decreased from the positive direction side toward the negative direction side in the x-axis direction. Furthermore, as shown in FIG. 2, the distance between a contact surface S5 of the recess 30 on the positive direction side in the z-axis direction and a contact surface S6 of the recess 30 on the negative direction side in the z-axis direction (a contact surface facing the contact surface S5) is decreased from the positive direction side toward the negative direction side in the x-axis direction.

In addition, as shown in FIGS. 2 and 3, a matching agent injection window W1 is provided in a surface S7 of the sealing resin 18 on the positive direction side in the z-axis direction. As shown in FIG. 3, the matching agent injection window W1 is a substantially rectangular cut that is located substantially at the center of the surface S7 in the y-axis direction and extends from an end portion of the sealing resin 18 on the positive direction side in the x-axis direction to the bottom surface S2. Furthermore, as shown in FIGS. 2 and 3, a matching agent injection window W2 is provided in a surface S8 of the sealing resin 18 on the negative direction side in the z-axis direction. As shown in FIG. 3, the matching agent injection window W2 is a substantially rectangular cut that is located substantially at the center of the surface S8 in the y-axis direction and extends from the end portion of the sealing resin 18 on the positive direction side in the x-axis direction to the bottom surface S2.

The metal cover 40 is a member having a substantially rectangular parallelepiped shape obtained by bending a metal plate (e.g., phosphor bronze). As shown in FIGS. 1 and 4, the metal cover 40 forms a surface of the plug 12 on the positive direction side in the x-axis direction, surfaces of the plug 12 on both sides in the y-axis direction, and a surface of the plug 12 on the negative direction side in the z-axis direction.

As shown in FIGS. 1 and 4, the metal cover 40 is composed of a top surface 40a and side surfaces 40b to 40j. The top surface 40a is a surface perpendicular to the z-axis and is substantially rectangular. As shown in FIG. 4, the side surfaces 40b and 40c are formed by bending the metal cover 40 at a long side of the top surface 40a on the negative direction side in the y-axis direction toward the z-axis positive direction. The side surface 40b is located on the positive direction side in the x-axis direction with respect to the side surface 40c. As shown in FIG. 1, the side surfaces 40d and 40e are formed by bending the metal cover 40 at a long side of the top surface 40a on the positive direction side in the y-axis direction toward the z-axis positive direction. The side surface 40d is located on the positive direction side in the x-axis direction with respect to the side surface 40e.

As shown in FIG. 4, the side surface 40f is formed by bending the metal cover 40 at a short side of the top surface 40a on the positive direction side in the x-axis direction toward the z-axis positive direction. In addition, a hole 50 for passing the optical fiber 100 therethrough is provided substantially at the center of the side surface 40f in the z-axis direction. The hole 50 extends in the y-axis direction and is substantially rectangular.

As shown in FIG. 1, the side surface 40g is formed by bending the metal cover 40 at a short side of the side surface 40f on the negative direction side in the y-axis direction toward the x-axis negative direction. The side surface 40g is located on the positive direction side in the y-axis direction with respect to the side surface 40b and overlaps the side surface 40b. Furthermore, the side surface 40h is formed by bending the metal cover 40 at a short side of the side surface 40g on the negative direction side in the x-axis direction toward the y-axis positive direction. As shown in FIG. 1, the side surface 40i is formed by bending the metal cover 40 at a short side of the side surface 40f on the positive direction side in the y-axis direction toward the x-axis negative direction. The side surface 40i is located on the negative direction side in the y-axis direction with respect to the side surface 40d and overlaps the side surface 40d. Furthermore, the side surface 40j is formed by bending the metal cover 40 at a short side of the side surface 40i on the negative direction side in the x-axis direction toward the y-axis negative direction.

As shown in FIGS. 1 and 4, recesses 80 to 83 are provided in the metal cover 40. The recesses 80 to 83 are formed by providing recesses in the side surfaces 40b to 40e, respectively. It should be noted that the substrate 16 and the sealing resin 18 containing the optical device 14 are accommodated in a space surrounded by the top surface 40a and the side surfaces 40c, 40e, 40h, and 40j. As shown in FIG. 1, the sealing resin 18 and the substrate 16 are positioned in the x-axis direction with respect to the metal cover 40 by the surface of the sealing resin 18 on the positive direction side in the x-axis direction coming into contact with the side surfaces 40h and 40j.

The plug 12 and the optical fiber 100 configured as described above are connected to each other, whereby the optical transmission module 10 is formed. More specifically, the end surface S1 of the optical fiber 100 shown in FIG. 1 comes into contact with the bottom surface S2 of the sealing resin 18 through the hole 50. In addition, in a process of inserting the optical fiber 100, the optical fiber 100 is inserted with the side surface of the optical fiber 100 in contact with the contact surfaces S3 to S6 of the sealing resin 18 shown in FIG. 2. At that time, the optical fiber 100 is positioned in the y-axis direction with respect to the sealing resin 18 by the contact surfaces S3 and S4. In addition, the optical fiber 100 is positioned in the z-axis direction with respect to the sealing resin 18 by the contact surfaces S5 and S6. In other words, the contact surfaces S3 to S6 serve as guides for inserting the optical fiber 100.

In the plug 12 in which the optical fiber 100 is inserted, a matching agent that is a transparent resin material is injected to a minute gap between the end surface S1 and the bottom surface S2 through the matching agent injection window W1 or W2. It should be noted that the purpose of injecting the matching agent is to fill the minute gap between the end surface S1 and the bottom surface S2 to improve the optical transmittance. After the matching agent is cured, a resin 70 such as an epoxy resin is injected to a space surrounded by the top surface 40a, and the side surfaces 40f to 40j, and the recess 30. As a result of the resin 70 being cured, the optical fiber 100 is fixed to the plug 12 as shown in FIG. 5, and the optical transmission module 10 is completed. The completed optical transmission module 10 is mounted to a box-like housing having a substantially rectangular parallelepiped shape, and used.

### (Configuration of receptacle)

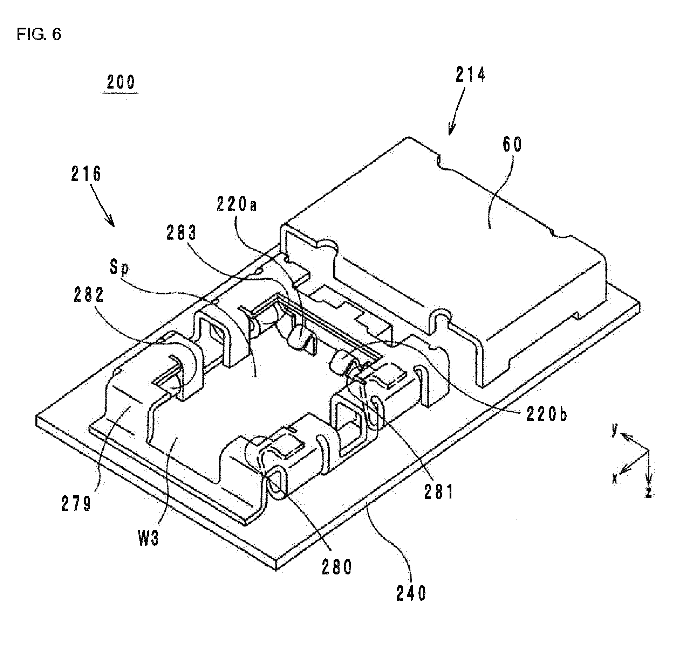

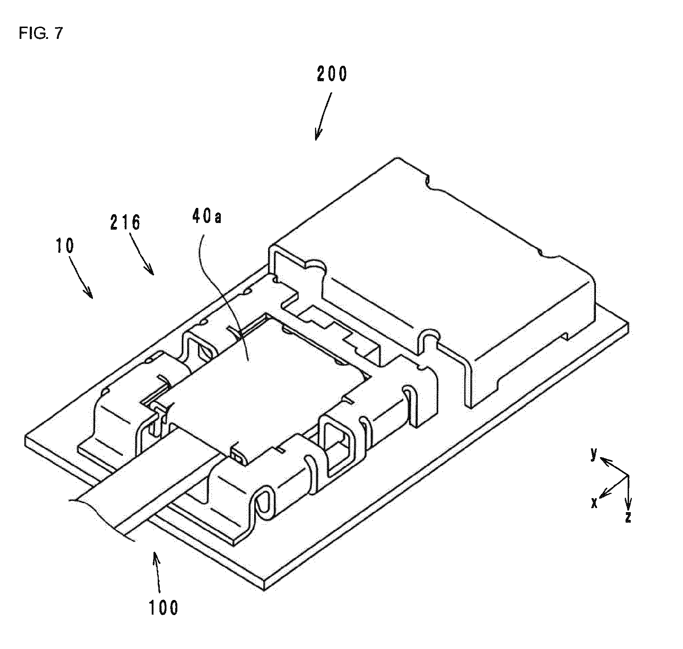

Hereinafter, a receptacle 200 to which the optical transmission module 10 is mounted will be described with reference to the drawings. FIG. 6 is an external perspective view of the receptacle 200. FIG. 7 is an external perspective view of the optical transmission module 10 and the receptacle 200.

As shown in FIG. 6, the receptacle 200 has a substantially rectangular parallelepiped shape and includes a circuit module 214, a housing 216, connection terminals 220a and 220b, and a substrate 240. Hereinafter, the direction along long sides of the substrate 240 is defined as an x-axis direction, and the direction along short sides of the substrate 240 is defined as a y-axis direction. In addition, the normal direction of a principal surface of the substrate 240 is defined as a z-axis direction. The x-axis direction, the y-axis direction, and the z-axis direction are orthogonal to each other.

As shown in FIG. 6, the circuit module 214 and the housing 216 are provided so as to be aligned in order from the negative direction side toward the positive direction side in the x-axis direction. The circuit module 214 includes a metal cap 60, an electric circuit (not shown), and a resin portion (not shown). The resin portion covers the electric circuit and is covered with the metal cap 60. The electric circuit is a circuit for driving the optical device 14 and is composed of circuits provided on a surface of the substrate 240 and within the substrate 240 and an electronic component mounted on the substrate 240.

The housing 216 is a housing to which the optical transmission module 10 is mounted, and includes a main body 279 and retaining members 280 to 283. The main body 279 and the retaining members 280 to 283 are made by bending a metal plate.

As shown in FIG. 6, the main body 279 has a shape surrounding the periphery of the plug 12 of the optical transmission module 10 (i.e., a square hollow shape) when being seen in a planar view from the negative direction side in the z-axis direction. Thus, the main body 279 has a space Sp for accommodating the plug 12. In addition, in a surface of the main body 279 on the positive direction side in the x-axis direction, a substantially rectangular cut W3 for passing the optical fiber 100 therethrough is provided as shown in FIG. 6. Furthermore, the main body 279 is connected to a ground conductor within the substrate 240. Thus, the housing 216 is kept at a ground potential.

As shown in FIG. 6, the retaining members 280 to 283 are provided at the inner periphery of the main body 279. More specifically, the retaining members 280 and 281 are provided at the inner periphery of the main body 279 on the negative direction side in the y-axis direction so as to be aligned in order from the positive direction side toward the negative direction side in the x-axis direction. In addition, the retaining members 282 and 283 are provided at the inner periphery of the main body 279 on the positive direction side in the y-axis direction so as to be aligned in order from the positive direction side toward the negative direction side in the x-axis direction.

As shown in FIG. 6, the connection terminals 220a and 220b are provided in a space sandwiched between the substrate 240 and a side of the main body 279 on the negative direction side in the x-axis direction, so as to be aligned in order from the positive direction side toward the negative direction side in the y-axis direction. The connection terminals 220a and 220b are connected to the electric circuit for driving the optical device 14.

The optical transmission module 10 is fitted and fixed to the receptacle 200 configured as described above. More specifically, as shown in FIG. 7, the optical transmission module 10 is fitted into the space Sp of the housing 216 such that the optical fiber 100 extends in the x-axis direction and the top surface 40a of the metal cover 40 faces toward the negative direction side of the receptacle 200 in the z-axis direction. At that time, the recesses 80 to 83 of the metal cover 40 shown in FIGS. 1 and 4 are engaged with the retaining members 280 to 283 of the housing 216 shown in FIG. 6, whereby the optical transmission module 10 is fixed to the housing 216. Thus, the metal cover 40 is kept at a ground potential. In addition, the external terminals 20a and 20b of the optical transmission module 10 are respectively in contact with the connection terminals 220a and 220b with pressure. Thus, the optical device 14 and the electric circuit within the circuit module 214 are electrically connected to each other.

### (Advantageous effects)

According to the optical transmission module 10 configured as described above, a holder for retaining the optical fiber 100 is not required but it is possible to easily conduct the operation of coupling the optical fiber 100 and the optical device 14. More specifically, in the optical fiber 100, the resin materials are used for both the core wire 102 and the cover portion 104. Thus, in the optical fiber 100, it is possible to simultaneously cut the core wire 102 and the cover portion 104. Therefore, the end surface S1 of the optical fiber 100 is composed of the cut surfaces of the core wire 102 and the cover portion 104 that have been cut by the same plane, as shown in FIG. 1. In other words, the end portion of the core wire 102 is covered with the cover portion 104. Therefore, the end portion of the optical fiber 100 has higher rigidity than an optical fiber whose core wire is not covered with a cover portion. Thus, even when the optical fiber 100 is pressed directly against the bottom surface S2 of the sealing resin 18, the core wire 102 does not bend and the direction of the optical axis of the core wire 102 is stabilized. In other words, according to the optical transmission module 10, it is possible to stabilize the direction of the optical axis of the core wire 102 even without needing the holder 506 for positioning the optical fiber 600 as in the plug 500 described in Japanese Unexamined Patent Application Publication No. 2012-68391. In addition, according to the optical transmission module 10, it is possible to stabilize the direction of the optical axis of the core wire 102 only by pressing the optical fiber 100 against the bottom surface S2 of the sealing resin 18. Thus, it is possible to easily conduct the operation of coupling the optical fiber 100 and the optical device 14.

In addition, in the process of inserting the optical fiber 100 into the plug 12, the optical fiber 100 is inserted with the side surface of the optical fiber 100 in contact with the contact surfaces S3 to S6 of the sealing resin 18 shown in FIG. 2. At that time, the optical fiber 100 is positioned in the y-axis direction with respect to the sealing resin 18 by the contact surfaces S3 and S4. In addition, the optical fiber 100 is positioned in the z-axis direction with respect to the sealing resin 18 by the contact surfaces S5 and S6. In other words, the core wire 102 of the optical fiber 100 is positioned in the y-axis direction and the z-axis direction, and the optical axes of the core wire 102 and the optical device 14 are caused to coincide with each other. Due to the above, according to the optical transmission module 10, it is possible to position the optical axis of the core wire 102 of the optical fiber 100 without needing the holder 506 for positioning the optical fiber 600 as in the plug 500 described in Japanese Unexamined Patent Application Publication No. 2012-68391. In addition, according to the optical transmission module 10, it is possible to further easily cause the optical axes of the optical fiber 100 and the optical device 14 to coincide with each other only by pressing the optical fiber 100 against the bottom surface S2 of the sealing resin 18.

In addition, as shown in FIG. 2, the distance in the y-axis direction between the contact surface S3 and the contact surface S4 of the sealing resin 18 of the optical transmission module 10 is decreased toward the negative direction side in the x-axis direction, namely, toward the direction in which the optical fiber 100 is inserted. Moreover, the distance in the z-axis direction between the contact surface S5 and the contact surface S6 is decreased toward the negative direction side in the x-axis direction, namely, toward the direction in which the optical fiber 100 is inserted. In other words, the area of an opening at the end portion of the sealing resin 18 on the positive direction side in the x-axis direction is larger than that of the bottom surface S2 provided on the negative direction side in the x-axis direction, as shown in FIG. 2. Thus, it is possible to easily insert the optical fiber 100 into the plug 12.

In the optical transmission module 10, the retaining member 509 for retaining the optical fiber 600, which is provided in the plug 500 described in Japanese Unexamined Patent Application Publication No. 2012-68391, is not required. More specifically, in the optical transmission module 10, as shown in FIG. 5, after the optical fiber 100 is inserted into the plug 12, the resin 70 is injected to the space surrounded by the top surface 40a, the side surfaces 40f to 40j, and the recess 30 of the plug 12. Then, as a result of the resin 70 being cured, the optical fiber 100 is fixed to the plug 12. Therefore, in the optical transmission module 10, a retaining member for retaining the optical fiber 100 is not required.

Furthermore, in the optical transmission module 10, the shape of the end surface S1 of the optical fiber 100 is substantially rectangular. Therefore, the area of the end surface S1 of the optical fiber 100 is larger than the area of the cross-section of a general optical fiber having a circular cross section. Thus, when the end surface S1 is pressed against the bottom surface S2 of the sealing resin 18, the direction of the optical fiber 100 is stabilized.

In the optical transmission module 10, it is possible to conduct the operation of coupling the optical fiber 100 and the optical device 14, more accurately than in the plug 500 described in Japanese Unexamined Patent Application Publication No. 2012-68391. More specifically, in the plug 500, the holder 506 for positioning the optical fiber 600 and the photoelectric conversion device mounted portion 508 containing the photoelectric conversion device 504 are different members. In this case, in assembling the holder 506 and the photoelectric conversion device mounted portion 508, there is the possibility that displacement will occur between the holder 506 and the photoelectric conversion device mounted portion 508.

Meanwhile, in the optical transmission module 10, a member for positioning the optical fiber 100 and a member containing the optical device 14 are the sealing resin 18. Therefore, in the optical transmission module 10, it is not necessary to take into consideration displacement occurring between the member for positioning the optical fiber 100 and the member containing the optical device 14. In other words, according to the optical transmission module 10, it is possible to conduct the operation of coupling the optical fiber 100 and the optical device 14, more accurately than in the plug 500 described in Japanese Unexamined Patent Application Publication No. 2012-68391.

### (Other embodiments)

The optical transmission module according to the present invention is not limited to the optical transmission module 10 according to the embodiment, and it is possible to modify the optical transmission module within the scope of the present invention. For example, the end surface of the optical fiber 100 may be substantially elliptic.

As described above, the present invention is useful for an optical transmission module and is particularly excellent in allowing an operation of coupling an optical fiber and an optical device to be easily conducted even though a holder for positioning the optical fiber is not required.

While preferred embodiments of the invention have been described above, it is to be understood that variations and modifications will be apparent to those skilled in the art without departing from the invention, defined by the following claims.

## Claims

1. An optical transmission module comprising:
an optical fiber including a core wire made of a resin and a cover portion made of a resin and covering the core wire, the optical fiber having an end surface formed by cutting the core wire and the cover portion by the same plane; and
a plug including an optical device optically coupled to the core wire and a sealing resin containing the optical device and having a bottom surface with which the end surface is in contact.

2. The optical transmission module according to Claim 1, wherein a distance between contact surfaces of the sealing resin which are in contact with side surfaces of the optical fiber and face each other is decreased toward a direction in which the optical fiber is inserted.

3. The optical transmission module according to Claim 1 or 2, wherein the optical fiber is fixed by a resin in the plug.

4. The optical transmission module according to any one of Claims 1 to 3, wherein the end surface is rectangular.

5. The optical transmission module according to any one of Claims 1 to 4, wherein the end surface is elliptic.
